# EUROPEAN PATENT SPECIFICATION

(11) **EP 3 895 911 B1**
(45) Date of publication and mention of the grant of the patent: **31.01.2024**
(21) Application number: 19897187.1
(22) Date of filing: 16.07.2019
(51) Int. Cl.: B60C 9/08, B60C 9/20, B60C 15/00

(54) **PNEUMATIC TIRE**
LUFTREIFEN
PNEUMATIQUE

(30) Priority: 14.12.2018 JP 2018233973
(43) Date of publication of application: 20.10.2021
(73) Proprietor: BRIDGESTONE CORPORATION, Chuo-ku Tokyo 104-8340 (JP)
(72) Inventor: KOBAYASHI, Fumitaka, Tokyo 104-8340 (JP); ITO, Masafumi, Tokyo 104-8340 (JP)
(74) Representative: Marks & Clerk LLP
(86) International application number: PCT/JP2019/027926
(87) International publication number: WO 2020/121578

(56) References cited:
- WO-A1-2013/024516
- JP-A- S5 981 207
- JP-A- 2001 191 722
- JP-A- 2010 247 701
- JP-A- 2012 091 731
- JP-A- 2013 154 765
- JP-A- 2014 189 050
- JP-A- 2016 064 693
- JP-A- 2017 222 190
- US-A1- 2008 149 250

## Description

### TECHNICAL FIELD

The present invention relates to a pneumatic tire.

### BACKGROUND

Examples of a performance required for a pneumatic tire include a high vehicle movement performance and a sufficient durability against input of driving force. As a structure to acquire such a performance, there has heretofore been suggested a structure comprising a belt constituted of two or more inclined belt layers having belt cords adjacent to each other and crossing each other, and a belt reinforcement layer as required, constituted of a cord wound spirally in a tire circumferential direction around the whole belt or an end portion of the belt in a tire width direction (see, for example, PTL 1).

For a purpose of improving the vehicle movement performance, an axial force to be generated by the pneumatic tire is usually increased, and for this purpose, it is one of general means to heighten rigidity of the belt of the pneumatic tire. To heighten the rigidity of the belt, a method of taking belt cord physical properties into consideration and using a belt cord of a hard material, a method of increasing a number of belt cords of the belt layers to be driven per unit width in the tire width direction, or the like is often used.

However, in a conventional belt structure, due to the high rigidity of the belt, a failure such as crack development (so-called Tsutsuki) in an extending direction of the belt cord or separation in the tire circumferential direction easily occurs in the end portion of the belt in the tire width direction. This failure easily occurs especially during driving at a high speed, and hence, it is a difficult problem to acquire compatibility of the vehicle movement performance with the durability.

In the conventional belt structure, end portions of two or more inclined belt layers in the tire width direction may be covered with the above belt reinforcement layer. Even in this case, if a core of the failure occurs in the end portions of the inclined belt layers in the tire width direction, the belt reinforcement layer does not have any binding force in the tire width direction, and the failure accordingly develops between the spirally wound cords of the belt reinforcement layer, and easily reaches an outer surface of a tread portion. Consequently, there are challenges in sufficiently improving the durability.

Examples of measures to a failure in an end portion of a minimum width belt layer in the tire width direction due to the high rigidity of the belt include setting an inclination angle of the inclined belt layer to an optimal angle to suppress distortion around the end portion of the belt in the tire width direction, and additionally disposing a rubber layer to a periphery of the end portion of the belt in the tire width direction. However, these measures might cause another problem such as decrease in vehicle movement performance or a failure due to a thermal factor. Therefore, it has been required to suppress the failure in the end portion of the minimum width belt layer in the tire width direction by a different method.

### CITATION LIST

### Patent Literature

PTL 1: Japanese Patent Laid-Open No. 1991-096406. Attention is also drawn to the disclosure of JP S59 81207.

### SUMMARY

### (Technical Problem)

To solve problems, an object of the present invention is to provide a pneumatic tire in which vehicle movement performance and durability of the tire are compatible.

### (Solution to Problem)

A summary configuration of the present invention is as follows.

A pneumatic tire of the present invention comprises:
a pair of bead portions,
a carcass including one or more carcass plies, each carcass ply including a carcass main body portion engaged with a bead core embedded in each bead portion and a carcass folded-up portion extending from the carcass main body portion and folded up around the bead core, and
a belt including two or more inclined belt layers that are located outside the carcass in a tire radial direction, and cross each other to be inclined in opposite directions in a tire circumferential direction as a belt cord extends from one side toward the other side in the tire width direction between adjacent layers, wherein an end of the carcass folded-up portion of the carcass ply located on an outermost side of the tire in the carcass folded-up portion is located in the tire width direction inside an end in the tire width direction of the inclined belt layer on an outermost side in the tire radial direction, in the tire radial direction between the carcass main body portion and the inclined belt layer on an innermost side in the tire radial direction in the two or more inclined belt layers,
a carcass cord in the carcass folded-up portion of the carcass ply located on the outermost side of the tire in the carcass folded-up portion and the belt cord of the inclined belt layer on the outermost side in the tire radial direction cross each other to be inclined in the same direction in the tire circumferential direction as being from one side toward the other side in the tire width direction,
a difference between an inclination angle, to the tire circumferential direction, of the carcass cord in the carcass folded-up portion of the carcass ply located on the outermost side of the tire in the carcass folded-up portion and an inclination angle, to the tire circumferential direction, of the belt cord of the inclined belt layer on the outermost side in the tire radial direction is 30° or less,
in the two or more inclined belt layers, a width in the tire width direction of the inclined belt layer on the outermost side in the tire radial direction is larger than a width in the tire width direction of the inclined belt layer on the innermost side in the tire radial direction, and
in the two or more inclined belt layers, in-plane rigidity per unit width of the inclined belt layer on the innermost side in the tire radial direction is higher than in-plane rigidity per unit width of the inclined belt layer on the outermost side in the tire radial direction.

In the present description, "the width in the tire width direction" of the inclined belt layer or the like refers to a width in the tire width direction in a state where the pneumatic tire is assembled to an applicable rim, filled with a prescribed internal pressure and unloaded.

Here, "the applicable rim" indicates an approved rim (a measuring rim in Standards Manual of ETRTO, and a design rim in Year Book of TRA) in an applicable size described or to be described in future in an industrial standard effective in a district where the tire is produced and used, for example, JATMA Year Book of JATMA (the Japan Automobile Tyre Manufacturers Association) in Japan, Standards Manual of ETRTO (the European Tyre and Rim Technical Organization) in Europe, Year Book of TRA (the Tire and Rim Association, Inc.) in U.S. or the like (i.e., the above "rim" also includes a size that may be included in the above industrial standard in future, in addition to the existing size. Examples of "the size to be described in future" include sizes described as "future developments" in 2013 edition of Standards Manual of ETRTO). However, it is considered that a rim having a size that is not described in the above industrial standard refers to a rim having a width corresponding to a bead width of the tire. Furthermore, "the prescribed internal pressure" refers to an air pressure (a maximum air pressure) corresponding to a tire maximum load capacity of a standard of JATMA or the like in a tire with an applicable size. Note that in a case where the size is not described in the above industrial standard, "the prescribed internal pressure" refers to an air pressure (the maximum air pressure) corresponding to the maximum load capacity prescribed for each vehicle to which the tire is assembled.

Furthermore, in the present description, "the same direction" in "cross each other to be inclined in the same direction of the tire circumferential direction as being from one side toward the other side in the tire width direction" includes a case where the inclination angle of one cord in the tire circumferential direction is 90°. In this case, "the same direction" is assumed irrespective of an inclination direction and inclination angle of the other cord.

Additionally, in the present description, "the difference in inclination angle" refers to an absolute value of the difference.

Further, in the present description, in a case where it is described that the carcass ply is "located on the innermost side in the tire radial direction" or "located on the outermost side in the tire radial direction" and there is one carcass ply, the carcass ply itself is referred to.

### (Advantageous Effect)

According to the present invention, a pneumatic tire in which vehicle movement performance and durability of the tire are compatible can be provided.

### BRIEF DESCRIPTION OF THE DRAWINGS

In the accompanying drawings:
FIG. 1 is a schematic cross-sectional view of a pneumatic tire in a tire width direction according to an embodiment of the present invention;
FIG. 2 is a schematic view illustrating belt structures of pneumatic tires according to an example and a comparative example; and
FIG. 3 is a schematic view illustrating the belt structure of the pneumatic tire according to a comparative example.

### DETAILED DESCRIPTION

Hereinafter, a pneumatic tire (hereinafter, referred to also as the tire) of an embodiment of the present invention will be illustrated and described in detail with reference to the drawings.

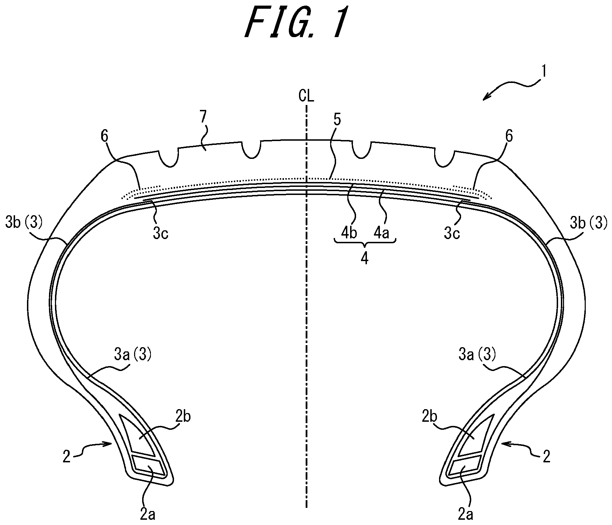

FIG. 1 is a schematic cross-sectional view of the pneumatic tire in a tire width direction according to the embodiment of the present invention. FIG. 1 is a schematic cross-sectional view in the tire width direction in a state where the tire is assembled to an applicable rim, filled with a prescribed internal pressure and unloaded. As illustrated in FIG. 1, a tire 1 comprises a pair of bead portions 2, and a carcass 3 including one or more (although illustrated by one line in a simplified manner in the drawing, two carcass plies are illustrated in the present embodiment) carcass plies, each carcass ply comprising a carcass main body portion 3a engaged with a bead core 2a embedded in each bead portion 2 and a carcass folded-up portion 3b extending from the carcass main body portion 3a and folded up around the bead core 2a. Also, the tire 1 comprises a belt 4 comprising two or more (two in an illustrated example) inclined belt layers 4a, 4b that are located outside the carcass 2 in a tire radial direction, and cross each other to be inclined in opposite directions in a tire circumferential direction as a belt cord extends from one side toward the other side in the tire width direction between the layers. Furthermore, as illustrated in FIG. 1, the tire 1 includes two belt reinforcement layers (a cap layer 5 and a layer 6) outside the belt 4 in the tire radial direction. Specifically, the tire 1 includes the cap layer 5 that covers the whole belt 4 in the tire width direction, and further includes a pair of layers 6 that cover end portions in the tire width direction of the inclined belt layers 4a, 4b, outside the cap layer 5 in the tire radial direction. The tire 1 includes a tread portion 7 outside the belt reinforcement layer in the tire radial direction. Furthermore, although not illustrated, the tire 1 includes an inner liner on a tire inner surface. Note that the tire of the illustrated example has a configuration symmetric to a tire equator plane CL as a boundary, but may have a configuration asymmetric to the tire equator plane CL as the boundary in the present invention.

Here, there are not any special restrictions on a configuration of the bead core 2a, and the core may include any known configuration in the pneumatic tire. For example, the bead core 2a may be formed in any of various shapes such as a round cross-sectional shape, and a polygonal cross-sectional shape (e.g., a quadrangular cross-sectional shape or a hexagonal cross-sectional shape) (substantially in a parallelogram cross-sectional shape in the illustrated example). Furthermore, for example, a linear material of a high carbon steel may be used as a material of a bead wire that forms the bead core 2a. In the illustrated example, a bead filler 2b substantially having a triangular cross-sectional shape is disposed outside the bead core 2a in the tire radial direction. Furthermore, in the present embodiment, for improving durability of the tire, it is preferable to dispose a flipper (not illustrated) that is a reinforcing member disposed between the carcass main body portion 3a and the carcass folded-up portion 3b, and containing at least parts of the bead core 2a and the bead filler 2b, the member being obtainable by arranging a plurality of highly elastic organic fiber cords and coating the cords with a rubber.

It is described in the present embodiment that the carcass 2 comprises two carcass plies. In the present invention, there are not any special restrictions on a number of the carcass plies as long as the number is one or more. Furthermore, there are not any special restrictions on a material of a carcass cord of the carcass 2, and as an example, an organic fiber such as rayon, nylon, polyethylene naphthalate (PEN), polyethylene terephthalate (PET), aramid, glass fiber or carbon fiber, steel or the like may be used. In the present embodiment, an end 3c of the carcass folded-up portion 3b of the carcass ply located on an outermost side of the tire in the carcass folded-up portion 3b is located in the tire width direction inside an end in the tire width direction of the inclined belt layer 4b on an outermost side in the tire radial direction, in the tire radial direction between the carcass main body portion 3a and the inclined belt layer 4a on an innermost side (further located in the tire width direction inside the end in the tire width direction of the inclined belt layer 4a on the innermost side in the tire radial direction). Consequently, anti-cut resistance or the like of the tire can improve. An overlap width in the tire width direction between the end 3c of the carcass folded-up portion 3b and the end in the tire width direction of the inclined belt layer 4b on the outermost side in the tire radial direction may be, for example, from 5 mm to 10 mm. Furthermore, in the present embodiment, the carcass cord in the carcass folded-up portion 3b of each of two carcass plies is inclined at an angle of 65° or more in the tire circumferential direction. Additionally, in the present embodiment, the carcass cord in the carcass folded-up portion 3b of each of the two carcass plies extends at an inclination angle of less than 90°. Then, between the two carcass plies, the carcass cords cross each other to be inclined in opposite directions in the tire circumferential direction as being from one side toward the other side in the tire width direction. Note that in the present invention, the carcass ply of the carcass 2 may be a so-called radial carcass inclined at an angle of 90° to the tire circumferential direction.

It is described in the present embodiment that the belt 4 comprises two inclined belt layers 4a, 4b, but in the present invention, there are not any special restrictions on a number of the inclined belt layers as long as the number is two or more. Furthermore, there are not any special restrictions on a material of the belt cord of the belt 4, but it is preferable that the cord is a steel cord. In the present embodiment, the carcass cord in the carcass folded-up portion 3b of the carcass ply located on the outermost side of the tire in the carcass folded-up portion 3b in two carcass plies and the belt cord of the inclined belt layer 4b on the outermost side in the tire radial direction in two inclined belt layers cross each other to be inclined in the same direction in the tire circumferential direction as being from one side toward the other side in the tire width direction, between the layers. That is, in an overlapped portion in the tire width direction between the end 3c of the carcass folded-up portion 3b of the carcass ply located on the outermost side of the tire in the carcass folded-up portion 3b in the two carcass plies and the end in the tire width direction of the inclined belt layer 4b on the outermost side in the tire radial direction, the carcass cord in the carcass folded-up portion 3b of the carcass ply and the belt cord of the inclined belt layer 4b on the outermost side in the tire radial direction cross each other to be inclined in the same direction in the tire circumferential direction as being from one side toward the other side in the tire width direction between the layers. Note that in the present embodiment, an inclination angle, to the tire circumferential direction, of the belt cord of the inclined belt layer 4a on the innermost side in the tire radial direction and an inclination angle, to the tire circumferential direction, of the belt cord of the inclined belt layer 4b on the outermost side in the tire radial direction are 25° or more. Furthermore, in the present embodiment, an inclination angle of the belt cord of the inclined belt layer 4a on the innermost side in the tire radial direction to the tire circumferential direction and an inclination angle of the belt cord of the inclined belt layer 4b on the outermost side in the tire radial direction to the tire circumferential direction are 80° or less.

In the present embodiment, a difference between the inclination angle, to the tire circumferential direction, of the carcass cord in the carcass folded-up portion 3b of the carcass ply located on the outermost side of the tire in the carcass folded-up portion 3b and the inclination angle, to the tire circumferential direction, of the belt cord of the inclined belt layer 4b on the outermost side in the tire radial direction is 30° or less. Furthermore, in the two belt layers, a width in the tire width direction of the inclined belt layer 4b on the outermost side in the tire radial direction is larger than a width in the tire width direction of the inclined belt layer 4a on the innermost side in the tire radial direction. For example, the width in the tire width direction of the inclined belt layer 4b on the outermost side in the tire radial direction may be from 105% to 110% of the width in the tire width direction of the inclined belt layer 4a on the innermost side in the tire radial direction.

Also, in the present embodiment, in the two belt layers, in-plane rigidity per unit width of the inclined belt layer 4a on the innermost side in the tire radial direction is higher than in-plane rigidity per unit width of the inclined belt layer 4b on the outermost side in the tire radial direction. Specifically, in the present embodiment, a diameter of the belt cord of the inclined belt layer 4a on the innermost side in the tire radial direction is larger than a diameter of the belt cord of the inclined belt layer 4b on the outermost side in the tire radial direction (e.g., may be larger by 0.2 to 0.5 mm). Note that in the present embodiment, the diameter of the belt cord of the inclined belt layer 4b on the outermost side in the tire radial direction is 0.5 mm or less.

The cap layer 5 is obtainable by spirally winding a strip of a cord coated with a rubber in the tire circumferential direction. It is preferable to use a cord made of a highly elastic organic fiber as the cord of the cap layer 5. As a material of the organic fiber cord, an organic fiber such as aromatic polyamide (aramid), polyethylene naphthalate (PEN), polyethylene terephthalate (PET), rayon, Xyron^{®} (Xyron is a registered trademark in Japan, other counties, or both) (polyparaphenylene benzobisoxazole (PBO) fiber), aliphatic polyamide (nylon), or polyketone may be used.

The layer 6 is obtainable by spirally winding a strip of the cord coated with a rubber in the tire circumferential direction. It is also preferable to use a cord made of a highly elastic organic fiber as the cord of the layer 6. As a material of the organic fiber cord, an organic fiber such as aromatic polyamide (aramid), polyethylene naphthalate (PEN), polyethylene terephthalate (PET), rayon, Xyron^{®} (polyparaphenylene benzobisoxazole (PBO) fiber), aliphatic polyamide (nylon), or polyketone may be used.

It is described in the present embodiment that the configuration includes one cap layer 5 and one layer 6, but in the present disclosure, there are not any special restrictions on a number of layers in the cap layer 5 and the layer 6. The configuration may include either one of the cap layer 5 and the layer 6, or the configuration does not have to include any of the layers. Furthermore, in the present embodiment, the configuration includes one layer 6 in a half portion of each side of the tire equator plane CL as the boundary in the tire width direction, but the configuration may include the layer 6 only in either one of half portions in the tire width direction.

In the present invention, there are not any special restrictions on a configuration of the tread portion 7, and any known tread structure may be adopted. There are not any special restrictions on, for example, compounding of a tread rubber.

Hereinafter, operations and effects of the pneumatic tire of the present embodiment will be described.

In the pneumatic tire of the present embodiment, the in-plane rigidity per unit width of the inclined belt layer 4a on the innermost side in the tire radial direction is higher than the in-plane rigidity per unit width of the inclined belt layer 4b on the outermost side in the tire radial direction, and hence, a vehicle movement performance such as cornering power of the tire can improve. However, only with this configuration, such a failure as described above, e.g., crack development (so-called Tsutsuki) in an extending direction of the belt cord or separation in the tire circumferential direction easily occurs in the end portion in the tire width direction of the inclined belt layer 4a on the innermost side in the tire radial direction.

To solve this problem, in the present embodiment, the width in the tire width direction of the inclined belt layer 4b on the outermost side in the tire radial direction is larger than the width in the tire width direction of the inclined belt layer 4a on the innermost side in the tire radial direction. Consequently, an end portion in the tire width direction of the inclined belt layer 4a on the inner side in the tire radial direction is covered with the inclined belt layer 4b on the outer side in the tire radial direction. If cracks occur, the cracks can be inhibited from being developed to an outer surface of the tread portion 7.

On the other hand, since the width in the tire width direction of the inclined belt layer 4b on the outermost side in the tire radial direction is larger than the width in the tire width direction of the inclined belt layer 4a on the innermost side in the tire radial direction, the carcass ply located on the outermost side of the tire in the carcass folded-up portion 3b and the inclined belt layer 4b on the outermost side in the tire radial direction include an adjacent portion in the tire radial direction, in the overlapped portion in the tire width direction between the end 3c of the carcass folded-up portion 3b of the carcass ply located on the outermost side of the tire in the carcass folded-up portion 3b and the end in the tire width direction of the inclined belt layer 4b on the outermost side in the tire radial direction.

In contrast, in the present embodiment, the carcass cord in the carcass folded-up portion 3b of the carcass ply located on the outermost side of the tire in the carcass folded-up portion 3b and the belt cord of the inclined belt layer 4b on the outermost side in the tire radial direction cross each other to be inclined in the same direction in the tire circumferential direction as being from one side toward the other side in the tire width direction.

Consequently, so-called pantograph deformation can be inhibited from being noticeably generated between layers of the carcass ply and the inclined belt layer 4b on the outermost side in the tire radial direction, in a vicinity of an end of the carcass folded-up portion 3b.

Further, in the present embodiment, the difference between the inclination angle, to the tire circumferential direction, of the carcass cord in the carcass folded-up portion 3b of the carcass ply located on the outermost side of the tire in the carcass folded-up portion 3b and the inclination angle, to the tire circumferential direction, of the belt cord of the belt layer 4b on the outermost side in the tire radial direction is 30° or less.

Consequently, the above pantograph deformation can be further inhibited from being noticeably generated, and the above failure can be inhibited.

As above, according to the present embodiment, the vehicle movement performance and durability of the tire are compatible.

As described above, in the present embodiment, the carcass ply of the carcass 2 may be the so-called radial carcass inclined at an angle of 90° to the tire circumferential direction. Also, in this case, the above operations and effects can be achieved by setting, to 30° or less, the difference between the inclination angle of 90°, to the tire circumferential direction, of the carcass cord of the carcass ply located on the outermost side of the tire in the carcass folded-up portion 3b and the inclination angle, to the tire circumferential direction, of the belt cord of the belt layer 4b on the outermost side in the tire radial direction.

It is preferable in the present embodiment that the difference between the inclination angle, to the tire circumferential direction, of the carcass cord in the carcass folded-up portion 3b of the carcass ply located on the outermost side of the tire in the carcass folded-up portion 3b and the inclination angle, to the tire circumferential direction, of the belt cord of the inclined belt layer 4b on the outermost side in the tire radial direction is 25° or less. The above pantograph deformation can be more effectively inhibited from being noticeably generated, and the vehicle movement performance of the tire can thus be maintained, while the durability can further improve.

It is more preferable in the present embodiment that the difference between the inclination angle, to the tire circumferential direction, of the carcass cord in the carcass folded-up portion 3b of the carcass ply located on the outermost side of the tire in the carcass folded-up portion 3b and the inclination angle, to the tire circumferential direction, of the belt cord of the inclined belt layer 4b on the outermost side in the tire radial direction is 20° or less. The above pantograph deformation can be further effectively inhibited from being noticeably generated, and the vehicle movement performance of the tire can thus be maintained, while the durability can further improve.

It is preferable in the present invention that the inclination angle, to the tire circumferential direction, of the carcass cord in the carcass folded-up portion 3b of the carcass ply located on the outermost side of the tire in the carcass folded-up portion 3b is 65° or more and 90° or less and that the inclination angle, to the tire circumferential direction, of the belt cord of the inclined belt layer 4b on the outermost side in the tire radial direction is 25° or more and 80° or less. This is because the above pantograph deformation can be inhibited from being noticeably generated, and the effect that the vehicle movement performance and durability of the tire are compatible can be more securely obtained. The inclination angle of the above carcass cord to the tire circumferential direction is set to 65° or more, so that the in-plane rigidity (especially the rigidity in the tire width direction) can improve, and the vehicle movement performance of the tire can improve. Also, the inclination angle of the above belt cord to the tire circumferential direction is set to 25° or more, so that the in-plane rigidity can improve, and the vehicle movement performance of the tire can improve. On the other hand, the inclination angle of the above belt cord to the tire circumferential direction is set to 80° or less, so that in-plane rigidity (especially the rigidity in the tire circumferential direction) can improve, and the vehicle movement performance of the tire can improve. Then, the above described difference in inclination angle can be adjusted to 30° or less (preferably 25° or less, and more preferably 20° or less) within a range of these inclination angles.

It is preferable in the present invention that the inclination angle, to the tire circumferential direction, of the belt cord of the inclined belt layer 4b on the outermost side in the tire radial direction is 30° or more and 45° or less. In the above pantograph deformation, a deformation amount in the tire circumferential direction is usually larger than a deformation amount in the tire width direction, and hence, the inclination angle of the belt cord to the tire circumferential direction is set to be comparatively large, e.g., 30° or more as described above. Consequently, the deformation amount of the above pantograph deformation can be further decreased, and the effect that the vehicle movement performance and durability of the tire are compatible can be further obtained. Alternatively, the inclination angle of the belt cord to the tire circumferential direction may be set to 45° or less as described above, so that the rigidity of the tire in the circumferential direction can be heightened to improve the vehicle movement performance.

It is more preferable in the present invention that the inclination angle, to the tire circumferential direction, of the belt cord of the inclined belt layer 4b on the outermost side in the tire radial direction is 35° or more and 45° or less. In the above pantograph deformation, the deformation amount in the tire circumferential direction is usually larger than the deformation amount in the tire width direction, and hence, the inclination angle of the belt cord to the tire circumferential direction may be set to be comparatively large, e.g., 35° or more as described above. Consequently, the deformation amount of the above pantograph deformation can be further decreased, and the effect that the vehicle movement performance and durability of the tire are compatible can be further obtained. Alternatively, the inclination angle of the belt cord to the tire circumferential direction may be set to 45° or less as described above. Consequently, the rigidity of the tire in the circumferential direction can be heightened to improve the vehicle movement performance.

It is more preferable in the present invention that the inclination angle, to the tire circumferential direction, of the carcass cord in the carcass folded-up portion 3b of the carcass ply located on the outermost side of the tire in the carcass folded-up portion 3b is 70° or more. In the above pantograph deformation, the deformation amount in the tire circumferential direction is usually larger than the deformation amount in the tire width direction, and hence, the inclination angle of the carcass cord to the tire circumferential direction may be set to be comparatively large as described above. Consequently, the deformation amount of the above pantograph deformation can be further decreased, and the effect that the vehicle movement performance and durability of the tire are compatible can be further obtained.

It is preferable in the present invention that in the two or more inclined belt layers, the diameter of the belt cord of the inclined belt layer 4a on the innermost side in the tire radial direction is larger than the diameter of the belt cord of the inclined belt layer 4b on the outermost side in the tire radial direction as in the present embodiment. The in-plane rigidity per unit width of the inclined belt layer 4a on the innermost side in the tire radial direction can be more securely higher than the in-plane rigidity per unit width of the inclined belt layer 4b on the outermost side in the tire radial direction, and the vehicle movement performance of the tire can improve.

It is preferable in the present invention that the diameter of the belt cord of the inclined belt layer 4b on the outermost side in the tire radial direction is 0.5 mm or less. This is because the tire can be lightened, while the vehicle movement performance and durability of the tire are compatible. On the other hand, it is preferable that the diameter of the belt cord of the inclined belt layer 4a on the innermost side in the tire radial direction is 0.7 mm or more. This is because the vehicle movement performance of the tire can further improve.

Note that in the above embodiment, the diameter of the belt cord of the inclined belt layer 4a on the innermost side in the tire radial direction is set to be larger than the diameter of the belt cord of the inclined belt layer 4b on the outermost side in the tire radial direction. In the present invention, however, when setting the in-plane rigidity per unit width of the inclined belt layer 4a on the innermost side in the tire radial direction to be higher than the in-plane rigidity per unit width of the inclined belt layer 4b on the outermost side in the tire radial direction, a number of belt cords of the inclined belt layer 4a on the innermost side in the tire radial direction to be driven per unit width in the tire width direction may be set to be larger than a number of belt cords of the inclined belt layer 4b on the outermost side in the tire radial direction to be driven per unit width in the tire width direction. In this case, for example, the number of the belt cords of the inclined belt layer 4a on the innermost side in the tire radial direction to be driven per unit width in the tire width direction may be from 1.6 to 2.4 times the number of the belt cords of the inclined belt layer 4b on the outermost side in the tire radial direction to be driven per unit width in the tire width direction. Note that at this time, the number of the belt cords of the inclined belt layer 4a on the innermost side in the tire radial direction to be driven per unit width in the tire width direction may be set to be, for example, from 30 to 40 (cords/50 mm).

Furthermore, in the present invention, when setting the in-plane rigidity per unit width of the inclined belt layer 4a on the innermost side in the tire radial direction to be higher than the in-plane rigidity per unit width of the inclined belt layer 4b on the outermost side in the tire radial direction, Young's modulus of the belt cord of the inclined belt layer 4a on the innermost side in the tire radial direction may be set to be larger than Young's modulus of the belt cord of the inclined belt layer 4b on the outermost side in the tire radial direction. In this case, for example, Young's modulus (GPa) of the belt cord of the inclined belt layer 4a on the innermost side in the tire radial direction may be set to be from 1.6 to 2.4 times Young's modulus (GPa) of the belt cord of the inclined belt layer 4b on the outermost side in the tire radial direction.

Furthermore, as represented by X = Y×n×d, in which Y is Young's modulus (GPa) of the belt cord, n is the number (cords/50 mm) of the belt cords to be driven per unit width in the tire width direction, and d is the diameter (mm) of the belt cord, in the present invention, when setting the in-plane rigidity per unit width of the inclined belt layer 4a on the innermost side in the tire radial direction to be higher than the in-plane rigidity per unit width of the inclined belt layer 4b on the outermost side in the tire radial direction, as for the above parameter X, a parameter X1 of the inclined belt layer 4a on the innermost side in the tire radial direction may be set to be larger than a parameter X2 of the inclined belt layer 4b on the outermost side in the tire radial direction. At this time, for example, a ratio X1/X2 may be from 1.2 times or more and 1.5 times or less.

As above, the embodiment of the present invention has been described, but the present invention is not limited to the above embodiment.

For example, in the above embodiment, the number of the carcass plies is two, but there are not any special restrictions on the number as long as the number is one or more. Furthermore, the number of the layers of the belt is not limited to two.

Note that the tire of the present invention can be used especially suitably as a tire for a front wheel.

Hereinafter, examples of the present invention will be described, but the present invention is not limited to the following examples but only by the appended claims.

### EXAMPLES

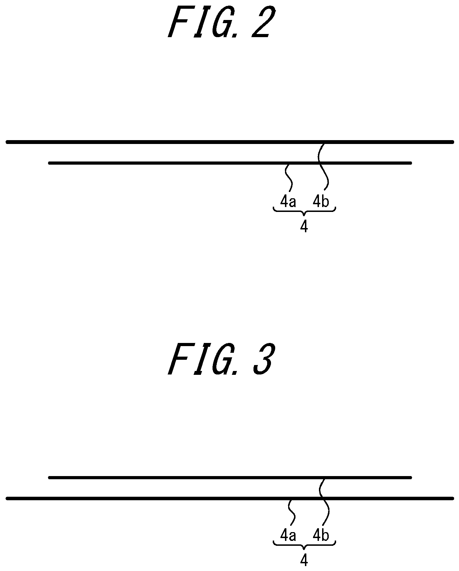

To check effects of the present invention, tires with a tire size of 245/45R17 according to Example (FIG. 2) and Comparative Example (FIG. 3) were made on an experimental basis. An inclined belt layer comprised two layers, a steel cord was used as a belt cord, and the layers were inclined at an angle of 45° to a tire circumferential direction. A carcass comprised two carcass plies including a carcass cord made of an organic fiber. In each tire, an end of a carcass folded-up portion of the carcass ply located on an outermost side of the tire in the carcass folded-up portion was located in a tire width direction inside an end in the tire width direction of the inclined belt layer on an outermost side in a tire radial direction, in the tire radial direction between a carcass main body portion and the inclined belt layer on an innermost side in the tire radial direction, and an overlap width in the tire width direction was from 5 to 10 mm.

Further, in each tire, the carcass cord in the carcass folded-up portion of the carcass ply located on the outermost side of the tire in the carcass folded-up portion and the belt cord of the inclined belt layer on the outermost side in the tire radial direction cross each other to be inclined in the same direction in the tire circumferential direction as being from one side toward the other side in the tire width direction.

Also, in the respective layers, cords (the belt cords, the carcass cords, or the belt cord and the carcass cord) crossed each other to be inclined in opposite directions between adjacent layers.

Note that it was assumed that the configuration did not include any belt reinforcement layers.

A difference between an inclination angle, to the tire circumferential direction, of the carcass cord in the carcass folded-up portion of the carcass ply located on the outermost side of the tire in the carcass folded-up portion and an inclination angle, to the tire circumferential direction, of the belt cord of the inclined belt layer on the outermost side in the tire radial direction was 40° in Comparative Example, and 15° in Example.

Furthermore, as to whether a width of the inclined belt layer was larger or smaller, in Example, a width in the tire width direction of the inclined belt layer on the innermost side in the tire radial direction was set to be smaller than a width in the tire width direction of the inclined belt layer on the outermost side in the tire radial direction, whereas in Comparative Example, a width in the tire width direction of the inclined belt layer on the innermost side in the tire radial direction was set to be larger than a width in the tire width direction of the inclined belt layer on the outermost side in the tire radial direction.

Each of the above tires was assembled to a rim with a rim size of 9J, filled with an internal pressure of 180 kPa, loaded with a load of 5 kN, and subjected to the following tests. Note that it was assumed that the tire was mounted to a left wheel of an actual vehicle.

### <Belt End Portion Durability Test>

In a tire drum tester, a test was carried out to roll an actual tire on conditions that a slip angle was 0° and a camber angle was 2° (an actual vehicle negative camber was assumed).

After driving at a velocity of 280 km/h in the drum tester, developed lengths of cracks generated in the tire were measured.

### <Test of Cornering Power of Tire alone>

In a tire flat belt tester, a test was carried out to measure cornering power when changing a slip angle from 0° to 8° while rolling each tire at a camber angle of 2° (the actual vehicle negative camber was assumed).

In the tire according to Example, as compared with the tire according to Comparative Example, a vehicle movement performance (the cornering power) and a durability (a belt end portion durability) were compatible.

### REFERENCE SIGNS LIST

- 1: pneumatic tire
- 2: bead portion
- 2a: bead core
- 2b: bead filler
- 3: carcass
- 3a: carcass main body portion
- 3b: carcass folded-up portion
- 3c: end
- 4: belt
- 4a, 4b: inclined belt layer
- 5: cap layer
- 6: layer
- 7: tread portion

## Claims

1. A pneumatic tire (1) comprising:
a pair of bead portions (2),
a carcass (3) including one or more carcass plies, each carcass ply including a carcass main body portion (3a) engaged with a bead core (2a) embedded in each bead portion and a carcass folded-up portion (3b) extending from the carcass main body portion and folded up around the bead core, and
a belt (4) including two or more inclined belt layers (4a, 4b) that are located outside the carcass in a tire radial direction, and cross each other to be inclined in opposite directions in a tire circumferential direction as a belt cord extends from one side toward the other side in the tire width direction between adjacent layers, wherein an end of the carcass folded-up portion of the carcass ply located on an outermost side of the tire in the carcass folded-up portion is located in the tire width direction inside an end in the tire width direction of the inclined belt layer on an outermost side in the tire radial direction, in the tire radial direction between the carcass main body portion and the inclined belt layer on an innermost side in the tire radial direction in the two or more inclined belt layers, and
a carcass cord in the carcass folded-up portion of the carcass ply located on the outermost side of the tire in the carcass folded-up portion and the belt cord of the inclined belt layer on the outermost side in the tire radial direction cross each other to be inclined in the same direction in the tire circumferential direction as being from one side toward the other side in the tire width direction, **characterized in that**:
a difference between an inclination angle, to the tire circumferential direction, of the carcass cord in the carcass folded-up portion of the carcass ply located on the outermost side of the tire in the carcass folded-up portion and an inclination angle, to the tire circumferential direction, of the belt cord of the inclined belt layer on the outermost side in the tire radial direction is 30° or less, **in that**
in the two or more inclined belt layers, a width in the tire width direction of the inclined belt layer on the outermost side in the tire radial direction is larger than a width in the tire width direction of the inclined belt layer on the innermost side in the tire radial direction, and **in that**
in the two or more inclined belt layers, in-plane rigidity per unit width of the inclined belt layer on the innermost side in the tire radial direction is higher than in-plane rigidity per unit width of the inclined belt layer on the outermost side in the tire radial direction.

2. The pneumatic tire according to claim 1, wherein the difference between the inclination angle, to the tire circumferential direction, of the carcass cord in the carcass folded-up portion of the carcass ply located on the outermost side of the tire in the carcass folded-up portion and the inclination angle, to the tire circumferential direction, of the belt cord of the inclined belt layer on the outermost side in the tire radial direction is 25° or less.

3. The pneumatic tire according to claim 2, wherein the difference between the inclination angle, to the tire circumferential direction, of the carcass cord in the carcass folded-up portion of the carcass ply located on the outermost side of the tire in the carcass folded-up portion and the inclination angle, to the tire circumferential direction, of the belt cord of the inclined belt layer on the outermost side in the tire radial direction is 20° or less.

4. The pneumatic tire according to any one of claims 1 to 3, wherein the inclination angle, to the tire circumferential direction, of the carcass cord in the carcass folded-up portion of the carcass ply located on the outermost side of the tire in the carcass folded-up portion is 65° or more and 90° or less, and
the inclination angle, to the tire circumferential direction, of the belt cord of the inclined belt layer on the outermost side in the tire radial direction is 25° or more and 80° or less.

5. The pneumatic tire according to claim 4, wherein the inclination angle, to the tire circumferential direction, of the belt cord of the inclined belt layer on the outermost side in the tire radial direction is 30° or more and 45° or less.

6. The pneumatic tire according to claim 5, wherein the inclination angle, to the tire circumferential direction, of the belt cord of the inclined belt layer on the outermost side in the tire radial direction is 35° or more and 45° or less.

7. The pneumatic tire according to any one of claims 1 to 6, wherein in the two or more inclined belt layers, a diameter of the belt cord of the inclined belt layer on the innermost side in the tire radial direction is larger than a diameter of the belt cord of the inclined belt layer on the outermost side in the tire radial direction.

8. The pneumatic tire according to claim 7, wherein the diameter of the belt cord of the inclined belt layer on the outermost side in the tire radial direction is 0.5 mm or less.

## Patentansprüche

1. Luftreifen (1), der Folgendes umfasst:
ein Paar von Wulstabschnitten (2),
eine Karkasse (3), die eine oder mehrere Karkassenschichten einschließt, wobei jede Karkassenschicht einen Karkassen-Hauptkörperabschnitt (3a), der mit einem Wulstkern (2a) in Eingriff gebracht ist, der in jedem Wulstabschnitt eingebettet ist, und einen hochgeklappten Karkassenabschnitt (3b), der sich von dem Karkassen-Hauptkörperabschnitt aus erstreckt und um den Wulstkern hochgeklappt ist, einschließt, und
einen Gürtel (4), der zwei oder mehrere geneigte Gürtellagen (4a, 4b) einschließt, die außerhalb der Karkasse in einer Reifenradialrichtung angeordnet sind und einander kreuzen, so dass sie in entgegengesetzten Richtungen in einer Reifenumfangsrichtung geneigt sind, wenn sich ein Gürtelkord von der einen Seite hin zu der anderen Seite in der Reifenbreitenrichtung zwischen benachbarten Lagen erstreckt, wobei ein Ende des hochgeklappten Karkassenabschnitts der Karkassenschicht, die auf einer äußersten Seite des Reifens in dem hochgeklappten Karkassenabschnitt angeordnet ist, in der Reifenbreitenrichtung innerhalb eines Endes in der Reifenbreitenrichtung der geneigten Gürtellage auf einer äußersten Seite in der Reifenradialrichtung, in der Reifenradialrichtung zwischen dem Karkassen-Hauptkörperabschnitt und der geneigten Gürtellage auf einer innersten Seite in der Reifenradialrichtung in den zwei oder mehreren geneigten Gürtellagen, angeordnet ist, und wobei
ein Karkassenkord in dem hochgeklappten Karkassenabschnitt der Karkassenschicht, die auf der äußersten Seite des Reifens in dem hochgeklappten Karkassenabschnitt angeordnet ist, und der Gürtelkord der geneigten Gürtellage auf der äußersten Seite in der Reifenradialrichtung einander kreuzen, so dass sie in derselben Richtung in der Reifenumfangsrichtung geneigt sind, wie sie es von der einen Seite hin zu der anderen Seite in der Reifenbreitenrichtung sind,
**dadurch gekennzeichnet, dass**:
eine Differenz zwischen einem Neigungswinkel, zu der Reifenumfangsrichtung, des Karkassenkords in den hochgeklappten Karkassenabschnitt der Karkassenschicht, die auf der äußersten Seite des Reifens in dem hochgeklappten Karkassenabschnitt angeordnet ist, und einem Neigungswinkel, zu der Reifenumfangsrichtung, des Gürtelkords der geneigten Gürtellage auf der äußersten Seite in der Reifenradialrichtung 30° oder weniger beträgt, dadurch, dass,
in den zwei oder mehreren geneigten Gürtellagen, eine Breite in der Reifenbreitenrichtung der geneigten Gürtellage auf der äußersten Seite in der Reifenradialrichtung größer ist als eine Breite in der Reifenbreitenrichtung der geneigten Gürtellage auf der innersten Seite in der Reifenradialrichtung und dadurch, dass,
in den zwei oder mehreren geneigten Gürtellagen, eine Steifigkeit in der Ebene je Breiteneinheit der geneigten Gürtellage auf der innersten Seite in der Reifenradialrichtung höher ist als eine Steifigkeit in der Ebene je Breiteneinheit der geneigten Gürtellage auf der äußersten Seite in der Reifenradialrichtung.

2. Luftreifen nach Anspruch 1, wobei die Differenz zwischen dem Neigungswinkel, zu der Reifenumfangsrichtung, des Karkassenkords in den hochgeklappten Karkassenabschnitt der Karkassenschicht, die auf der äußersten Seite des Reifens in dem hochgeklappten Karkassenabschnitt angeordnet ist, und dem Neigungswinkel, zu der Reifenumfangsrichtung, des Gürtelkords der geneigten Gürtellage auf der äußersten Seite in der Reifenradialrichtung 25° oder weniger beträgt.

3. Luftreifen nach Anspruch 2, wobei die Differenz zwischen dem Neigungswinkel, zu der Reifenumfangsrichtung, des Karkassenkords in den hochgeklappten Karkassenabschnitt der Karkassenschicht, die auf der äußersten Seite des Reifens in dem hochgeklappten Karkassenabschnitt angeordnet ist, und dem Neigungswinkel, zu der Reifenumfangsrichtung, des Gürtelkords der geneigten Gürtellage auf der äußersten Seite in der Reifenradialrichtung 20° oder weniger beträgt.

4. Luftreifen nach einem der Ansprüche 1 bis 3, wobei der Neigungswinkel, zu der Reifenumfangsrichtung, des Karkassenkords in den hochgeklappten Karkassenabschnitt der Karkassenschicht, die auf der äußersten Seite des Reifens in dem hochgeklappten Karkassenabschnitt angeordnet ist, 65° oder mehr und 90° oder weniger beträgt und
der Neigungswinkel, zu der Reifenumfangsrichtung, des Gürtelkords der geneigten Gürtellage auf der äußersten Seite in der Reifenradialrichtung 25° oder mehr und 80° oder weniger beträgt.

5. Luftreifen nach Anspruch 4, wobei der Neigungswinkel, zu der Reifenumfangsrichtung, des Gürtelkords der geneigten Gürtellage auf der äußersten Seite in der Reifenradialrichtung 30° oder mehr und 45° oder weniger beträgt.

6. Luftreifen nach Anspruch 5, wobei der Neigungswinkel, zu der Reifenumfangsrichtung, des Gürtelkords der geneigten Gürtellage auf der äußersten Seite in der Reifenradialrichtung 35° oder mehr und 45° oder weniger beträgt.

7. Luftreifen nach einem der Ansprüche 1 bis 6, wobei, in den zwei oder mehr geneigten Gürtellagen, ein Durchmesser des Gürtelkords der geneigten Gürtellage auf der innersten Seite in der Reifenradialrichtung größer ist als ein Durchmesser des Gürtelkords der geneigten Gürtellage auf der äußersten Seite in der Reifenradialrichtung.

8. Luftreifen nach Anspruch 7, wobei der Durchmesser des Gürtelkords der geneigten Gürtellage auf der äußersten Seite in der Reifenradialrichtung 0,5 mm oder weniger beträgt.

## Revendications

1. Pneumatique (1) comprenant :
une paire de parties de talon (2),
une carcasse (3) incluant une ou plusieurs nappes de carcasse, chaque nappe de carcasse incluant une partie de corps principal de carcasse (3a) en prise avec une tringle de talon (2a) incorporée dans chaque partie de talon et une partie de carcasse repliée (3b) s'étendant à partir de la partie de corps principal de carcasse et repliée autour de la tringle de talon, et
une ceinture (4) incluant deux ou plusieurs couches de ceinture inclinées (4a, 4b) qui sont situées à l'extérieur de la carcasse dans un sens radial du pneu, et se croisent de façon à être inclinées dans des directions opposées dans un sens circonférentiel du pneu tandis qu'un câblé de ceinture s'étend d'un côté dans le sens de largeur du pneu vers l'autre côté entre des couches adjacentes, dans lequel une extrémité de la partie repliée de carcasse de la nappe de carcasse située sur un côté le plus à l'extérieur du pneu dans la partie repliée de carcasse est située, dans le sens de la largeur du pneu, à l'intérieur d'une extrémité, dans le sens de la largeur du pneu, de la couche de ceinture inclinée sur un côté le plus à l'extérieur dans le sens radial du pneu, dans le sens radial du pneu entre la partie de corps principal de la carcasse et la couche de ceinture inclinée sur un côté le plus à l'intérieur dans le sens radial du pneu dans les deux ou plusieurs couches de ceinture inclinées, et dans lequel
un câblé de carcasse dans la partie repliée de carcasse de la nappe de carcasse située sur le côté le plus à l'extérieur du pneu dans la partie repliée de carcasse et le câblé de ceinture de la couche de ceinture inclinée sur le côté le plus à l'extérieur dans le sens radial du pneu se croisent de façon à être inclinés dans la même direction dans le sens circonférentiel du pneu comme étant d'un côté vers l'autre côté dans le sens de la largeur du pneu,
**caractérisé en ce que**
une différence entre un angle d'inclinaison, par rapport au sens circonférentiel du pneu, du câblé de carcasse dans la partie repliée de carcasse de la nappe de carcasse située sur le côté le plus à l'extérieur du pneu dans la partie repliée de carcasse et un angle d'inclinaison, par rapport au sens circonférentiel du pneu, du câblé de ceinture de la couche de ceinture inclinée sur le côté le plus à l'extérieur dans le sens radial du pneu est de 30° ou moins, et **en ce que**
dans les deux ou plusieurs couches de ceinture inclinées, une largeur, dans le sens de la largeur du pneu, de la couche de ceinture inclinée sur le côté le plus à l'extérieur dans le sens radial du pneu est supérieure à une largeur, dans le sens de la largeur du pneu, de la couche de ceinture inclinée sur le côté le plus à l'intérieur du pneu dans le sens radial du pneu, et **en ce que**
dans les deux ou plusieurs couches de ceinture inclinées, une rigidité dans le plan par largeur unitaire de la couche de ceinture inclinée sur le côté le plus à l'intérieur dans le sens radial du pneu est supérieure à une rigidité dans le plan par largeur unitaire de la couche de ceinture inclinée sur le côté le plus à l'extérieur dans le sens radial du pneu.

2. Pneumatique selon la revendication 1, dans lequel la différence entre l'angle d'inclinaison, par rapport au sens circonférentiel du pneu, du câblé de carcasse dans la partie repliée de carcasse de la nappe de carcasse située sur le côté le plus à l'extérieur du pneu dans la partie repliée de carcasse et l'angle d'inclinaison, par rapport au sens circonférentiel du pneu, du câblé de ceinture de la couche de ceinture inclinée sur le côté le plus à l'extérieur dans le sens radial du pneu est de 25° ou moins.

3. Pneumatique selon la revendication 2, dans lequel la différence entre l'angle d'inclinaison, par rapport au sens circonférentiel du pneu, du câblé de carcasse dans la partie repliée de carcasse de la nappe de carcasse située sur le côté le plus à l'extérieur du pneu dans la partie repliée de carcasse et l'angle d'inclinaison, par rapport au sens circonférentiel du pneu, du câblé de ceinture de la couche de ceinture inclinée sur le côté le plus à l'extérieur dans le sens radial du pneu est de 20° ou moins.

4. Pneumatique selon l'une quelconque des revendications 1 à 3, dans lequel l'angle d'inclinaison, par rapport au sens circonférentiel du pneu, du câblé de carcasse dans la partie repliée de carcasse de la nappe de carcasse située sur le côté le plus à l'extérieur du pneu dans la partie repliée de carcasse est supérieur ou égal à 65° et inférieur ou égal à 90°, et
l'angle d'inclinaison, par rapport au sens circonférentiel du pneu, du câblé de ceinture de la couche de ceinture inclinée sur le côté le plus à l'extérieur dans le sens radial du pneu est supérieur ou égal à 25° et inférieur ou égal à 80°.

5. Pneumatique selon la revendication 4, dans lequel l'angle d'inclinaison, par rapport au sens circonférentiel du pneu, du câblé de ceinture de la couche de ceinture inclinée sur le côté le plus à l'extérieur dans le sens radial du pneu est supérieur ou égal à 30° et inférieur ou égal à 45°.

6. Pneumatique selon la revendication 5, dans lequel l'angle d'inclinaison par rapport au sens circonférentiel du pneu du câblé de ceinture de la couche de ceinture inclinée sur le côté le plus à l'extérieur dans le sens radial du pneu est supérieur ou égal à 35° et inférieur ou égal à 45°.

7. Pneumatique selon l'une quelconque des revendications 1 à 6, dans lequel, dans les deux ou plusieurs couches de ceinture inclinées, un diamètre du câblé de ceinture de la couche de ceinture inclinée sur le côté le plus à l'intérieur dans le sens radial du pneu est supérieur à un diamètre du câblé de ceinture de la couche de ceinture inclinée sur le côté le plus à l'extérieur dans le sens radial du pneu.

8. Pneumatique selon la revendication 7, dans lequel le diamètre du câblé de ceinture de la couche de ceinture inclinée sur le côté le plus à l'extérieur dans le sens radial du pneu est égal ou inférieur à 0,5 mm.
